(19) **Europäisches Patentamt / European Patent Office / Office européen des brevets**

(11) **EP 3 929 578 A1**

(12) **EUROPEAN PATENT APPLICATION**
published in accordance with Art. 153(4) EPC

(43) Date of publication:
**29.12.2021 Bulletin 2021/52**

(51) Int Cl.:
**G01N 29/24** (2006.01)    **G01N 29/28** (2006.01)
**G10K 11/02** (2006.01)

(21) Application number: **20758835.1**

(22) Date of filing: **20.02.2020**

(86) International application number:
**PCT/ES2020/070122**

(87) International publication number:
**WO 2020/169869 (27.08.2020 Gazette 2020/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.02.2019 ES 201930140**

(71) Applicant: **Consejo Superior De Investigaciones Científicas (CSIC)**
**28006 Madrid (ES)**

(72) Inventor: **GÓMEZ ÁLVAREZ-ARENAS, Tomás**
**28006 Madrid (ES)**

(74) Representative: **Pons**
**Glorieta Rubén Darío 4**
**28010 Madrid (ES)**

(54) **LAMINAR STRUCTURE AS PART OF A PIEZOELECTRIC ULTRASONIC TRANSDUCER**

(57)    The present invention relates to a layered structure, the method for obtaining it and its use as part of a piezoelectric ultrasonic transducer to operate in broadband pulse-echo mode and with high sensitivity and axial resolution in the presence of a pressurised gas at a pressure between 14 bar and 103 bar. Furthermore, the present invention relates to the transducer comprising said layered or stratified structure. Therefore, the present invention can be framed in the area of materials with applications such as sensors in ultrasonic systems.

FIG. 1.

**Description**

The present invention relates to a layered structure, the method for obtaining it and its use as part of a piezoelectric ultrasonic transducer to operate in broadband pulse-echo mode and with high sensitivity and axial resolution in the presence of a pressurised gas at a pressure between 14 bar and 103 bar. Furthermore, the present invention relates to the transducer comprising said layered or stratified structure.

Therefore, the present invention can be framed in the area of materials with applications such as sensors in ultrasonic systems.

**BACKGROUND OF THE INVENTION**

The so-called pulse-echo ultrasonic technique for detecting internal discontinuities in solids or the rear surface thereof is well-known and has numerous industrial applications. This technique always uses liquid couplings (water or gel) or even soft solid couplings (dry coupling) between the ultrasound emitter/receiver (transducer) and the solid to be inspected (piece) and it is not particularly complex since this type of transducer/piece coupling is an effective way of ensuring efficient transmission of ultrasound from the transducer to the solid under inspection. This enables either the detection of internal discontinuities (detection of cracks, cavities or inclusions) in the solid or the opposite surface (thickness measurement).

When ultrasonic transducers operate by using air or gas coupling, the detection of echoes from gas/air interfaces with a solid, internal discontinuities of said solid, or the rear surface is much more complex since there is a strong acoustic impedance decoupling at the transducer-gas and gas-solid interfaces. This means that:

i) the sensitivity of the transducer is very poor,
ii) the transducer frequency band is limited
iii) the amplitude of the signal reflected in the first interface of the solid is very high, while that of the internal echoes (or of the rear face) is very weak.

Furthermore, i) and ii) give rise to the fact that the transducers used for gas-coupling have a very long ringing, which produces a dead zone that is also very long, making it impossible to discern the presence of echoes close in time, that is, the axial resolution is very poor.

For very high gas pressures, the above problems can be reduced in such a way that it becomes possible to solve the problem using conventional transducers for immersion in water. This is due to the fact that in this case of very high pressures, the increase in gas density contributes to the acoustic impedance of the gas increasing in the same proportion. For a sufficiently high pressure, the impedance mismatch between the transducer and gas and between the solid and gas may decrease so much that it may be possible to use a transducer designed to operate by means of liquid coupling. Although the result is not optimal, if the pressure is high enough and the impedance of the gas increases as necessary, it is possible to obtain an at least acceptable performance. In practice it has been seen that it is possible to apply this approach for pressures greater than 69-103 bar (1000-1500 psi (US005587534A). Unfortunately, these pressures are too high for most of the applications that occur in the industry so this approach is useless.

Indeed, the pressures used in the transport and distribution of gas are in the range of 14-103 bar (200-1500 psi), so this approach to the problem based on the use of conventional transducers for immersion in water is not useful, since at these pressures, transducers designed for coupling by means of liquids do not offer acceptable performance. As the pressure in the gas decreases (below 103 bar), the ultrasound attenuation increases and the impedance decreases, which reduces the sensitivity of the immersion transducers and produces a deterioration in the signal-to-noise ratio; in addition, it lengthens the response signal, which causes a loss of axial resolution.

Moreover, the existing transducers for coupling by means of air are not useful for this application either, since they are designed to operate at reduced pressures and because they are designed to work in transmission mode and not in pulse-echo mode, presenting a poor axial resolution that is not acceptable in these applications.

Therefore, it is necessary to develop new transducers resistant to high pressures (>14 bar), with high sensitivity (>-35 dB) and good axial resolution (<5 $\mu$s) to detect echoes generated by a solid body (and its internal discontinuities) in the presence of a pressurised gas and using said gas as a coupling medium.

**DESCRIPTION OF THE INVENTION**

The present invention relates to a layered or stratified structure and the method for obtaining it and the use of said layered or stratified structure as part of a piezoelectric ultrasonic transducer and to the transducer comprising said sheet or layered or stratified structure.

The piezoelectric ultrasonic transducer to which the present invention relates operates in broadband pulse-echo mode, with high sensitivity (>-35 dB) and with high axial resolution (<5 $\mu$s) in the presence of a pressurised gas at a pressure between 14 bar and 103 bar (200-1500 psi), that is, it operates by generating ultrasonic signals and detecting the echoes generated by a solid body in the presence of a pressurised gas at a pressure between 14 bar and 103 bar (200-1500 psi).

Said piezoelectric ultrasonic transducer has a high sensitivity >-30 dB and a bandwidth >90% and can be used to carry out the following measurements in tanks and pipes that contain or transport gases at pressures between 14 bar and 103 bar (between 200 psi and 1500 psi).

- Profilometry of the internal surface
- Measurement of wall thickness.
- Detection of corrosion by reduction of thickness.
- Detection of cracks or other defects.

In a first aspect, the present invention relates to a layered or stratified structure (hereinafter "the structure of the present invention") characterised in that it comprises

- a resonant adaptive polymer membrane (7) with a thickness between 50 $\mu$m and 150 $\mu$m presenting

   ◦ quarter-wave resonance conditions at a centre frequency $(f_c)$ greater than or equal to 1 MHz, between 1 MHz and 4 MHz,
   ◦ an acoustic impedance between 0.1 MRayl and 0.5 MRayl,
   ◦ a porosity greater than 70% and
   ◦ interconnected pores;

- a pressure-sensitive adhesive layer (6), less than 60 $\mu$m thick,

   ◦ located on the resonant layer (7) and covering said layer (7) completely;
   ◦ which has an acoustic impedance between 0.5 MRayl and 1.5 MRayl;

- a syntactic foam layer (5), with a thickness between 100 $\mu$m and 500 $\mu$m

   ◦ located on the sheet (6) and covering said sheet (6) completely,
   ◦ which has an acoustic impedance between 0.5 MRayl and 2 MRayl;

- a polymer shelayeret (4) with a thickness between 100 $\mu$m and 500 $\mu$m

   ◦ located on the layer (5) and covering said layer (5) completely,
   ◦ which has an acoustic impedance between 1.5 MRayl and 3.5 MRayl;

- a first conductive layer (2e), with a thickness of between 20 nm and 100 nm, located on the layer (4) and covering said layer (4) completely;
- a piezoelectric layer (1) comprising an internal face (i) and an external face (e)

   ◦ with a thickness between 0.5 mm and 2 mm,
   ◦ which is located on the conductive layer (2e), wherein the external face (e) is in direct contact with the conductive layer (2e), and
   ◦ which is partially covering said conductive layer (2e);

- a second conductive layer (2i), with a thickness of between 20 nm and 100 nm, located on the internal face (i) of the piezoelectric layer (1) and covering said layer (1) completely;
- a block (3), with anechoic conical finish,

   ◦ with a thickness between 15 mm and 30 mm,
   ◦ located on the conductive layer (2i) and extending around the layers (2i) and (1) until contacting the conductive layer (2e),
   ◦ which has an acoustic impedance between 5 MRayl and 10 MRayl,
   ◦ and which is composed of an epoxy resin comprising particles with a diameter between 1 $\mu$m and 50 $\mu$m selected from among tungsten, zirconia, alumina and any of the combinations thereof;

wherein (1), (2i), (2e), (3), (4), (5), (6) and (7) withstand hydrostatic pressures up to 3800 psi (262 bar),
wherein the piezoelectric layer is polarised along the thickness thereof, and
wherein the layers (4), (5) and (6) form an assembly having quarter-wave resonance conditions at the centre frequency of the transducer $(f_c)$ which in this case is a frequency greater than or equal to 1 MHz, between 1 MHz and 4 MHz. Said condition being met when it is verified that:

$$f_c = 1/[4(t_4/v_4 + t_5/v_5 + t_6/v_6)]$$

wherein $V_i$ and $t_i$ are the speed of the ultrasound and the thickness in layer i, where i = 3, 4, 5. The thickness of the piezoelectric layer (1) is determined from the resonance frequency of the transducer, being set in such a way that the frequency of the electrical resonance of the layer (1) is equal to $f_c$.

The layered or stratified structure of the present invention can have any cross section: circular, rectangular, square, etc.

In the present invention, "resonant adaptive polymer membrane" is understood as the layer with a porosity greater than 70% and with interconnected pores having an acoustic impedance of between 0.1 MRayl and 0.5 MRayl and quarter-wave resonance conditions at a centre frequency greater than or equal to 1 MHz, between 1 MHz and 4 MHz. Said layer is adaptive because, thanks to its open pore nature, the gas inside the pores is in equilibrium with the external gas and this allows it to modify the acoustic impedance thereof in accordance with the pressure of the external gas. Said layer is resonant because the thickness thereof is equal to a quarter of the ultrasound wavelength at the working frequency of the transducer $(f_c)$. As the pressure of the external gas varies, its density also varies and due to this open-pore nature, the effective density of the layer is also modified and does so in the same direction. A change in gas density implies a proportional change in the impedance thereof, in such a way that, to maintain an optimal coupling of the transducer, it would also be necessary to modify the impedance of the material on the external face, which is not possible. This problem is addressed by using this open-pore layer the impedance of which varies as necessary when the pressure of the external gas varies. For this reason it is classified as adaptive.

In the present invention, "pressure-sensitive adhesive layer" is understood as that adhesive tape configured for the permanent bonding of two solid surfaces that does not have any physical support. The term "pressure-sensitive" in the present invention is understood as that which its adhesive is activated under pressure.

In the present invention, "syntactic foam" is understood as that foam that is composed of a polymer matrix to which hollow microspheres of glass or other material with similar characteristics are added, preferably with a size <20 μm, distributed randomly. For example, said syntactic foams are used in flotation systems for deep-sea submarines, for depths of 700 m to 10,000 m.

In the present invention, "anechoic conical finish" is understood as that cone-shaped finish that has an internal anechoic structure designed to fully disperse the reflections produced by acoustic waves on any of the surfaces that comprise it.

In a preferred embodiment of the structure of the present invention, the resonant adaptive polymer membrane (7) is selected from polypropylene, cellulose nitrate, cellulose ester, polyethersulfone and nylon.

In another preferred embodiment of the structure of the present invention, the pressure-sensitive adhesive layer (6) is selected from an acrylic layer or a polyurethane layer.

In another preferred embodiment of the structure of the present invention, the syntactic foam layer (5) is composed of an epoxy resin with hollow spheres with a diameter between 1 μm and 20 μm. The hollow spheres are preferably glass or polyolefin.

The polymer layer (4) is preferably an epoxy resin.

In another preferred embodiment of the structure of the present invention, the conductive layers (2e) and (2i) are independently composed of a conductive material selected from Au, Ag, Cu, Sn and any of the combinations thereof.

In another preferred embodiment of the structure of the present invention, wherein the composition of the piezoelectric layer (1) is selected from a PZT-type ceramic of lead zirconate titanate $PbZrO_3$-$PbTiO_3$, a composite material of piezoelectric ceramic and resin with 1-3-type connectivity and with a volumetric concentration of ceramic between 25% and 80%, and a Pb $(Mg_{1/3}Nb_{2/3})O_3$-$PbTiO_3$ (PMN-PT)-type piezoelectric single crystal.

Another aspect of the invention relates to the method for obtaining the structure of the present invention (hereinafter "the method of the invention") characterised in that it comprises the following steps:

(a) joining the piezoelectric layer (1) covered by the conductive layers (2i) and (2e) to a sacrificial layer, preferably made of polycarbonate, by means of adhesive tape (6) on a first face,
(b) joining a metal housing or case (8) to the sacrificial layer with the help of adhesive tape (6),
(c) filling the space formed between the piezoelectric layer (1) and the metal housing or case with resin (3) and curing said resin (3),

(d) removing sacrificial layer,

(e) metallising the first face of the piezoelectric layer (1) so that the conductive layer (2e) completely covers the piezoelectric element and the edge of the bushing,

(f) depositing the polymer layer (4) on the conductive layer (2e), curing and polishing,

(g) affixing the syntactic foam layer (5) to the polymer layer (4), preferably the adhesive has the same composition as the polymer layer (4),

(h) adhering the pressure-sensitive adhesive layer (6) on the syntactic foam layer (5),

(i) affixing the resonant adaptive polymer membrane (7) to the pressure-sensitive adhesive layer (6),

(j) fastening the assembly of layers (1), (2e), (2i), (3), (4), (5), (6) and (7) for example to a protective crown or rim (11) and turning it over, and

(k) filling the inner space of the metal receptacle with the help of a conical mould to form a conical-shaped block (3).

The method of the present invention can be verified by measuring the electrical impedance at the terminals (layers (2i) and (2e)) in each step thereof.

In a preferred embodiment of the method of the present invention, step (e) of metallising the first face of the piezoelectric layer (1) to form the conductive layer (2e) that completely covers the piezoelectric element and the edge of the bushing is carried out by means of techniques selected from sputtering, vacuum metallisation, evaporation metallisation, screen-printed metallisation, dip coating and spin coating.

In another preferred embodiment of the method of the present invention, the deposition of step (f) is carried out by means of deposition techniques selected from dip coating, spin coating, and screen printing.

In another preferred embodiment of the method of the present invention, step (g) relating to affixing the syntactic foam layer (5) to the polymer layer (4) is carried out using an adhesive that has the same chemical composition as the polymer layer (4).

Another aspect of the present invention relates to the use of the structure of the present invention as part of a piezoelectric ultrasonic transducer to detect echoes generated by a solid body in the presence of a pressurised gas at a pressure of 14 bar and 103 bar (between 200 psi and 1500 psi), for example to detect echoes from natural gas pipelines.

It has been previously mentioned that the layered or stratified structure of the present invention can have any cross section: circular, rectangular, square, etc. The cross section of said structure will be selected according to the final cross section that is desired for the transducer; the shape of the metal housing or case (8) of step (b) of the method of the present invention will determine the final cross section of the transducer. For example, if a transducer with a circular cross section is to be obtained, then the metal housing or case (8) used in step (b) of the production method for obtaining the structure of the present invention will be cylindrical.

In the present invention, "piezoelectric ultrasonic transducer" is understood as the ultrasound generator and receiver based on the use of a piezoelectric material.

In the present invention, the piezoelectric ultrasonic transducer works in pulse echo mode, that is, between the transducer and the solid to be inspected through a pressurised gas, at a pressure between 14 bar and 103 bar (between 200 psi and 1500 psi).

The last aspect of the present invention relates to a piezoelectric ultrasonic transducer for detecting echoes generated by a solid body in the presence of a pressurised gas at a pressure between 14 bar and 103 bar (between 200 psi and 1500 psi), characterised in that it comprises

• the structure of the present invention mentioned above,

  ∘ wherein the resonant adaptive polymer membrane (7) is configured to act as a quarter-wave resonant layer at the centre frequency of the transducer,
  ∘ wherein the assembly formed by (4), (5) and (6) is configured to act together as a single resonant layer at the centre frequency of the transducer and gradually reduce the acoustic impedance of the structure,
  ∘ wherein the first conductive layer (2e) and the second conductive layer (2i) are configured to act as an electrode and enable the application/measurement of electric field in piezoelectric layer (1),
  ∘ wherein the block (3) is configured to damp the vibration of the piezoelectric layer (1) and avoid any background echo,

• a metal receptacle (8) comprising a coaxial connector (9) with a ground connection and an internal connector (10) of a rear cover (12) of the metal housing or case (8) and which is configured to house the layered structure and provide electromagnetic shielding.

  ∘ wherein (2e), (3), (4), (5), (6) and (7) are in contact with the internal walls of the housing or case (8);

• a coaxial connector (9) that joins the internal connector (10) of the rear cover (12) of the metal receptacle (8) to the second conductive layer (2i) that is configured to apply a voltage to the piezoelectric element through the connector or to measure the voltage generated in the piezoelectric element; and

- a protective crown (12) configured to protect the resonant adaptive polymer membrane (7) and the lateral edge of the resonant adaptive polymer membrane (7), the assembly formed by (4), (5) and (6), the block (3), the first conductive layer (2e) and the second conductive layer (2i).

Throughout the description and the claims, the word "comprise" and its variants are not intended to exclude other technical features, additions, components or steps. For those skilled in the art, other objects, advantages and features of the invention will be deduced from both the description and the practical use of the invention. The following examples and figures are provided by way of illustration and are not intended to limit the present invention.

## BRIEF DESCRIPTION OF THE FIGURES

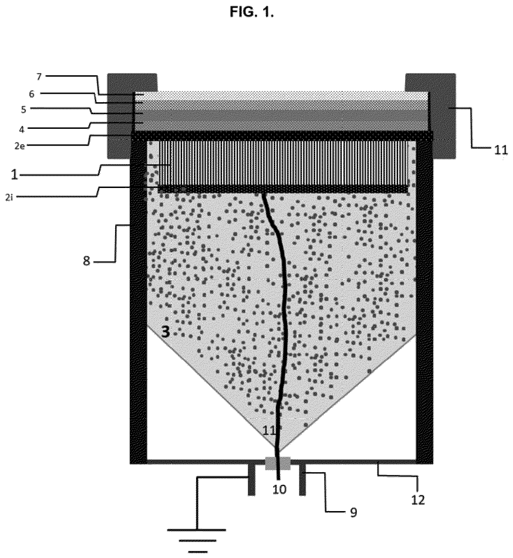

FIG. 1 is a schematic representation of the piezoelectric ultrasonic transducer

(1) Piezoelectric layer
(2) Conductive layer:
◦ first conductive layer (2e) and second conductive layer (2i)
(3) Damping block
(4) Polymer layer
(5) Syntactic foam layer
(6) Pressure-sensitive adhesive layer
(7) Resonant adaptive polymer membrane
(8) Metal housing or case
(9) Coaxial cable or connector
(10) Internal connector of the coaxial connector (9)
(11) Protective crown or rim
(12) Rear cover of the metal receptacle (8)

FIG. 2 shows the bushing, rear cover and front crown. Dimensions.

FIG. 3 shows the modulus of the electrical impedance (ohm) of the piezoelectric composite disc [(1), (2i), (2e)] compared to the frequency (MHz) measured in the vicinity of the resonance frequency (1 MHz). Dashed line: experimental measurement, dotted line: theoretical calculation.

FIG. 4 is a side view of the piezoelectric disc after soldering (1) the wire (2) to the metallised surface of the piezoelectric element (3)

FIG. 5 is a side view of the fastening of the piezoelectric disc to a polyurethane layer (2) using a double-sided adhesive (1).

FIG. 6 is a side view of the piezoelectric disc and the cylindrical housing or case (1) ready to be fastened concentrically.

FIG. 7 is a side view of the piezoelectric disc fastened to the housing or case using epoxy resin (1).

FIG. 8 is a side view of the piezoelectric disc fastened to the housing or case already released from the manufacturing support.

FIG. 9 is a side view of the piezoelectric disc fastened to the housing or case and with the external face completely metallised (1).

FIG. 10 shows the electrical impedance of the free piezoelectric disc (dashed line) and of the disc fastened to the housing or case (solid line).

FIG. 11 is a side view of the deposition of the resin layer (1) on the metallised surface.

**FIG. 12** is a side view of the transducer with the rectified and polished resin layer (1).

**FIG. 13** shows the electrical impedance of the transducer before (dashed line) and after (solid line) depositing and sanding the resin layer.

**FIG. 14** is a side view of the transducer with the deposited layers of epoxy adhesive (1) and syntactic foam (2).

**FIG. 15** shows the electrical impedance of the transducer before (dashed line) and after (solid line) depositing the syntactic foam layer.

**FIG. 16** is a side view of the transducer with the layers of adhesive tape (2) and membrane (1).

**FIG. 17** shows the electrical impedance of the transducer before (dashed line) and after (solid line) placing the membrane.

**FIG. 18** is a side view of the transducer with a front crown or rim (1).

**FIG. 19** is a side view of the transducer with the mould (1) for the completion of the backing

**FIG. 20** is a side view of the transducer with the backing (1) completed.

**FIG. 21** shows the electrical impedance of the transducer before (dashed line) and after (solid line) placing the backing.

**FIG. 22** is a side view of the transducer with the free end of the cable soldered to the internal pin (3) of the coaxial connector (2) housed in the rear cover (1).

**FIG. 23** is a side view of the transducer closed at the rear.

**FIG. 24** shows the spectrum of the transmission coefficient (magnitude and phase) of the membrane used for the external layer of the transducer. Solid line: theoretical calculation of the magnitude, dashed line: theoretical calculation of the phase, data points: measurements.

**FIG. 25** shows the impulse response (a) and sensitivity band (b) of the 1 MHz transducer in air under normal conditions.

**FIG. 26** shows the impulse response (a) and sensitivity band (b) of the 1 MHz transducer in air with an overpressure of 5 bar.

**EXAMPLES**

The invention shall be illustrated below by way of assays carried out by the inventors, which shows the effectiveness of the product of the invention.

The following exemplary embodiment relates to a piezoelectric ultrasonic transducer with a circular cross section. The following table 1 lists and describes the elements that make up the transducer.

Table 1: Elements of the transducer with the description thereof

| Element | | Description |
|---|---|---|
| Piezoelectric layer | (1) | PZT5A piezoelectric ceramic in epoxy resin matrix. Volumetric concentration of PZT5A piezoelectric ceramic 50%, Polarised in the direction of thickness. 1-3 connectivity (dice and fill, pixel: 200 $\mu$m) |
| | | Shape: disc Diameter: 9.83 mm Thickness: 1.544 mm |

(continued)

| Element | | Description |
|---|---|---|
| Conductive layer | (2i) and (2e) | CuSn conductive layer<br>Thickness: 100 nm |
| Block | (3) | Epoxy resin loaded with tungsten particles (diameter 20 $\mu$m).<br>Acoustic impedance 4 MRayl.<br>Thickness: 30 mm |
| Polymer layer | (4) | Epoxy resin<br>Impedance: 2.75 MRayl<br>Shape: disc<br>Diameter: 14 mm<br>Thickness: 360 $\mu$m |
| Syntactic foam layer | (5) | Epoxy resin loaded with hollow glass spheres (diameter 20 $\mu$m),<br>Impedance: 0.7 MRayl.<br>Shape: disc<br>Diameter: 14 mm<br>Thickness: 330 $\mu$m |
| Pressure-sensitive adhesive layer | (6) | Impedance: 0.7 MRayl<br>Shape: disc<br>Thickness: 60 $\mu$m<br>Diameter: 14 mm |
| Resonant adaptive polymer membrane | (7) | Material: Polypropylene<br>Impedance: 0.1 MRayl<br>Porosity 70%<br>Thickness: 90 $\mu$m<br>Diameter: 14 mm<br>Interconnected pores |
| Metal housing or case | (8) | Aluminium tube<br>Internal diameter: 11 mm<br>External diameter: 13.3 mm<br>Length: 28 mm |
| Rear Cable or Connector | (9) | Panel SMB-type connector.<br>It is a standard type of coaxial connector |
| Front face protective crown | (11) | Aluminium<br>External diameter: 15.2 mm<br>Light: 11.0 mm<br>Height: 5.1 mm |
| * It is a composite material of piezoelectric ceramic and resin. The resin is the matrix and the ceramic comes in the form of a stack of pillars. This type of compound is referred to as 1-3, 1 because the ceramic is connected only in 1 direction, which are the pillars, and 3 because the resin is connected in the three directions of space, which is a matrix. | | |

Dice and fill refers to the standard manufacturing method of this material: a ceramic disk is taken, a series of regularly spaced cuts are produced in two orthogonal directions that form the pillars, and the gaps are then filled with resin.
The materials used in the manufacturing are listed below:
Structural elements [(8), (9), (11)]:

- Conductive metal housing or case (cylinder with internal diameter 11 mm and wall thickness 1 mm). 25 mm in length.
- Flat rear cover with circular through hole in the centre for SMB connector.

- Metal front crown or rim for protection of the radiant face.

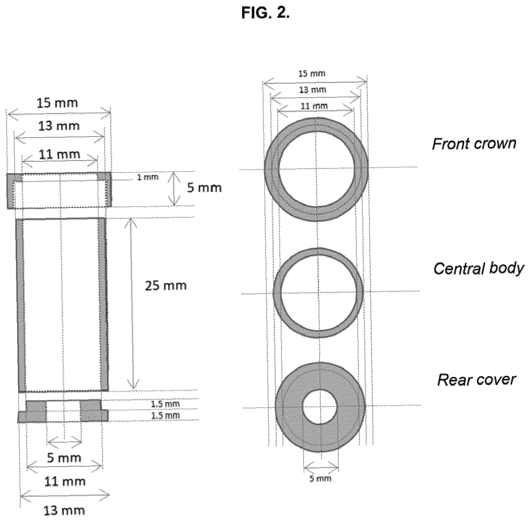

Housing or case, rear cover and front crown or rim according to Figure 2.
Other materials:

- SMB-type panel coaxial connector.
- Cable (0.2 mm) [(9)].
- Disc of piezoelectric composite material [(1), (2i), (2e)], 1-3 connectivity, PZT5A ceramic and 50% epoxy resin. Manufactured by the dice and fill technique. Polarised in the thickness direction and metallised on both flat faces (100 nm thick CuSn coating). Disc with 9.83 mm diameter, 1.54 mm thickness. Resonance frequency: 1 MHz.
- Epoxy resin, density 1150 kg/m$^3$, ultrasound speed 2450 m/s [(4)]
- Syntactic foam [(5)] (epoxy resin loaded with hollow spheres, diameter <20 $\mu$m (acoustic impedance of 0.7 MRayl and ultrasound velocity of 2100 m/s).
- Double-sided pressure-sensitive adhesive tape [(6)]. Without support, thickness: 60 microns, acoustic impedance 0.6 MRayl.
- Resonant polymer membrane [(7)] at the centre frequency of the transducer (1MHz $\pm$10%). Material: Polypropylene; Impedance: 0.095 MRayl ($\pm$10%); Porosity: 70%, Porosity type: open (interconnected). Thickness: 90 $\mu$m Diameter: 14 mm.

Materials for the backing [(3)]:

- Epoxy resin, density 1150 kg/m$^3$, ultrasound speed 2450 m/s
- Rubber powder (particle size <120 microns).
- Tungsten powder (particle size: 12 microns).

Auxiliary materials:

- Low density polyurethane foam (100-300 kg/m$^3$) for the manufacture of the conical mould for finishing the backing [(3)].
- Demoulding agent.
- Plastic layer (200 um, polycarbonate).
- Tin and paste for soldering.

Manufacturing method:

*(1) Method for the initial verification of the piezoelectric disc by measuring the electrical impedance and for successive verifications during the manufacturing process.*

The integrity and suitability of the piezoelectric disc is checked by measuring the electrical impedance thereof in an impedance analyser or network analyser in the vicinity of the resonance frequency of the thickness mode provided by the manufacturer, in this case 1 MHz. To measure the electrical impedance of the disc, the metallised faces are connected to the output terminals of the impedance analyser. It is verified that the electrical resonance is at 1 MHz (tolerance 5%). This will be the centre frequency of the transducer to be manufactured. The integrity of the piezoelectric resonance is also verified by comparing the measured impedance curve with that which is provided by the manufacturer. Likewise, the almost negligible influence of radial modes of vibration is verified (lower frequency resonances and the harmonics thereof that can overlap with the resonance of the thickness mode located at 1 MHz).

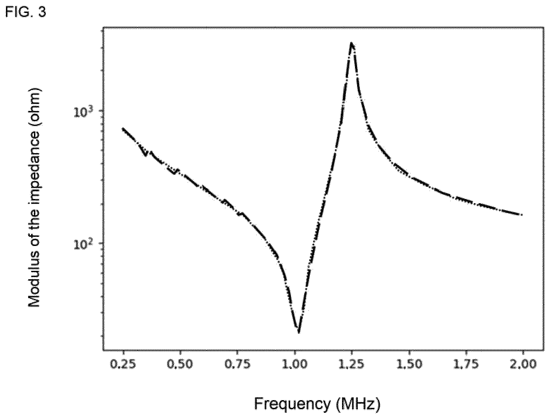

Figure 3 shows the Modulus of the electrical impedance (ohm) of the piezoelectric composite disc [(1), (2i), (2e]] compared to the frequency (MHz) measured in the vicinity of the resonance frequency (1 MHz). The curve with the dashed line is the experimental measure and the dotted curve is that which is calculated theoretically (model 1D). The small oscillations at low frequencies are the radial modes on the disc that are practically negligible compared to the thickness mode that appears at 1 MHz.
This same electrical impedance measurement taken at the terminals of the piezoelectric disc is repeated at each step of the process to verify the integrity of the piezoelectric response and the correct assembly and sizing of the layers and elements placed at each step by comparing the measured impedance curve with that which is calculated knowing the properties (thickness, impedance and damping) of each deposited layer.

*(2) Fastening the piezoelectric disc to the jousting or case and preparing electrical connections.*

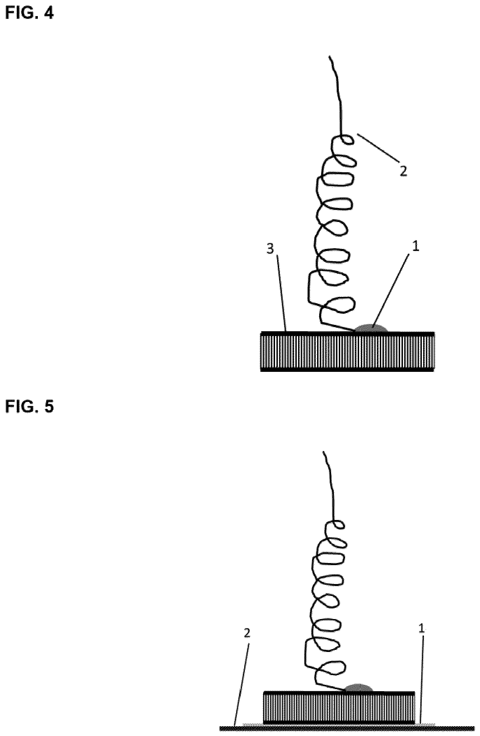

A piece of cable with a length approximately equal to twice the length of the housing or case (60 mm in this case) is taken and both ends are stripped to a length, approximately 3 mm). It is wound in the form of a solenoid (with an approximate diameter of 1/3 the internal diameter of the bushing, 4 mm in this case, and a similar length to that of the housing or case, 28.2 mm in this case) and one of the ends thereof is soldered to one of the faces of the piezoelectric disc using tin and paste for soldering. The other end of the cable is free. See Figure 4. Side view of the piezoelectric disc after soldering the cable.

A demoulding agent is applied to the other face of the piezoelectric disc.

A plastic layer (polycarbonate 200 um, 30 x 30 mm) is taken and double-sided adhesive tape is affixed on a 40 x 40 mm surface. This will act as a support for fastening the piezoelectric disc to the housing or case. The piezoelectric disc is affixed to this layer on the face on which the demoulding agent was applied. See Figure 5. *Side view of the piezoelectric disc with the cable fastened to the support for fastening to the housing or case.*

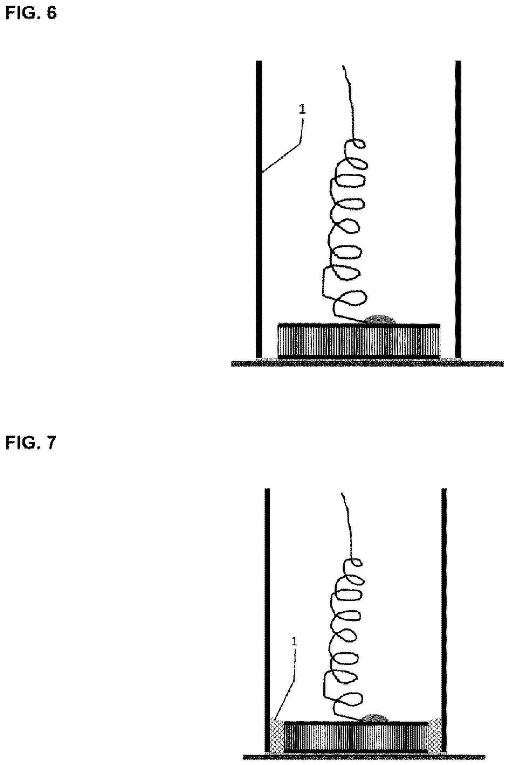

The metal housing or case is affixed to the plastic film concentrically to the piezoelectric disc, ensuring the leak-tightness of the cavity formed by the bushing, piezoelectric disc and polycarbonate layer. See Figure 6. Side view of the piezoelectric disc and housing or case, ready to be fastened.

The edge between the housing or case and the piezoelectric disc (width of 1 mm in the present example) is filled with epoxy resin loaded with tungsten powder and rubber powder, manufactured following the method explained in (3). See Figure 7. Side view of the piezoelectric disc fastened to the housing or case.

The resin deposited between the housing or case and the piezoelectric disc is left to cure.

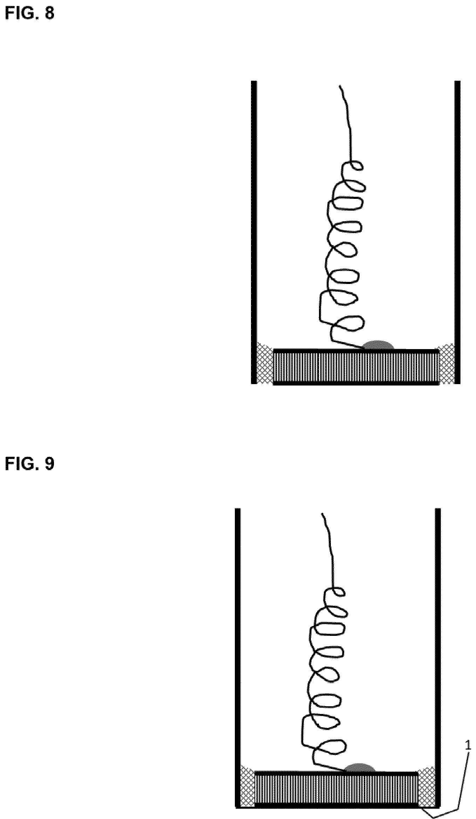

Once the resin has cured, the polycarbonate layer affixed to the piezoelectric disc and cylinder is removed. The external surface of the piezoelectric disc and the edge of the metal housing or case are cleaned of any remaining adhesive residue, preserving the metallisation of the piezoelectric disc. The end result in this step is that the piezoelectric disc is fastened to the housing or case by means of a resin ring loaded with tungsten powder See Figure 8. Side view of the piezoelectric disc fastened to the housing or case already released from the manufacturing support.

The surface that has just been cleaned is metallised: piezoelectric disc + resin ring + edge of the housing or case. Any available technique can be used, either sputtering, evaporation or screen printing. See Figure 9. Side view of the piezoelectric disc fastened to the housing or case with the external face completely metallised.

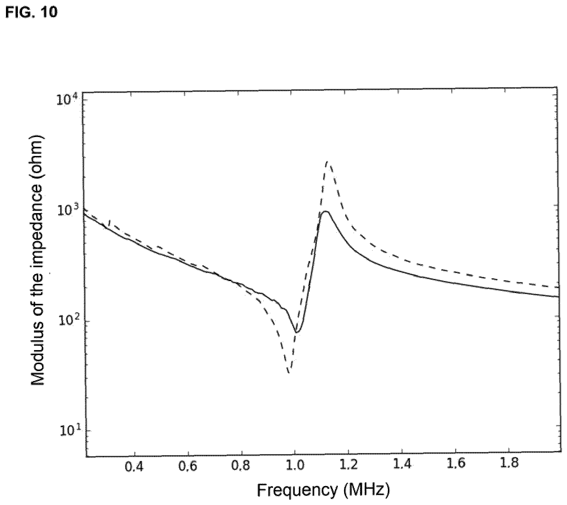

Finally, the electrical conductivity between the surface that has just been metallised and the metal housing or case of the transducer is verified and the electrical impedance measurement is repeated to verify that the piezoelectric resonance remains unchanged except for the introduction of a slight damping due to the fastening from the piezoelectric disc to the housing or case. The result of the impedance measurement is shown in Figure 10 wherein the measurements corresponding to the free piezoelectric disc and the disc fastened in the housing or case can be seen and the damping effect introduced when the piezoelectric disc is fastened to the housing or case can be verified both in thickness mode and in radial modes that disappear completely.

*(3) Manufacture of the multilayer material for optimal adaptation of impedances to gas/air.*

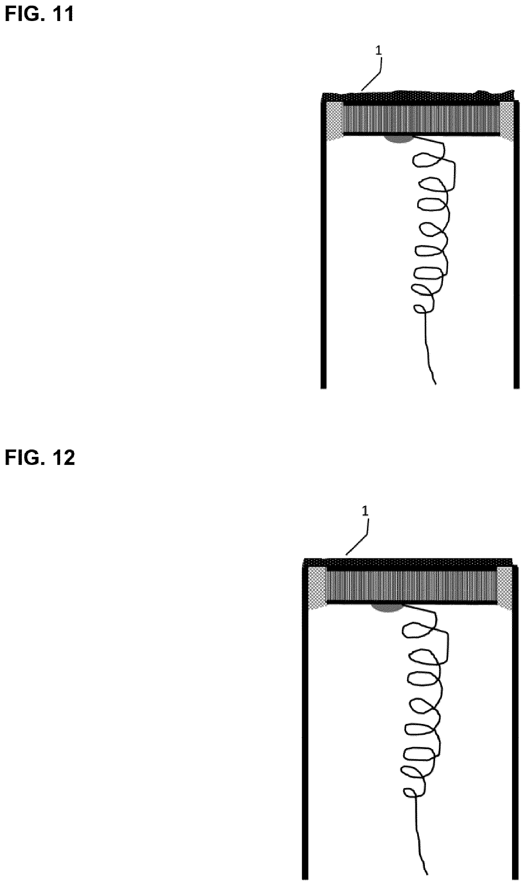

Deposition of a 300-350 micron resin layer, using a screen printing, deep coating or any similar technique on the external surface of the piezoelectric disc. For this purpose, both components of the resin are mixed, the trapped air is removed using a vacuum hood and deposited, while in a liquid state, on the metallised surface, covering it completely. It is not necessary for the deposited layer to lie flat or parallel. The amount of resin deposited, equivalent to a 300-350 micron layer, is controlled by means of weighing on a precision scale. The final result can be seen in Figure 11 showing a side view of the deposition of the resin layer on the metallised surface.

The resin thus deposited is left to cure following the resin manufacturer's instructions.

Once cured, its external surface is polished using an automatic polisher to leave a flat finish normal to the axis of the bushing. The final thickness of this layer should be 260 $\mu$m, roughness < 5 $\mu$m. The result after this step can be seen in Figure 12. Side view of the transducer with the rectified and polished resin layer.

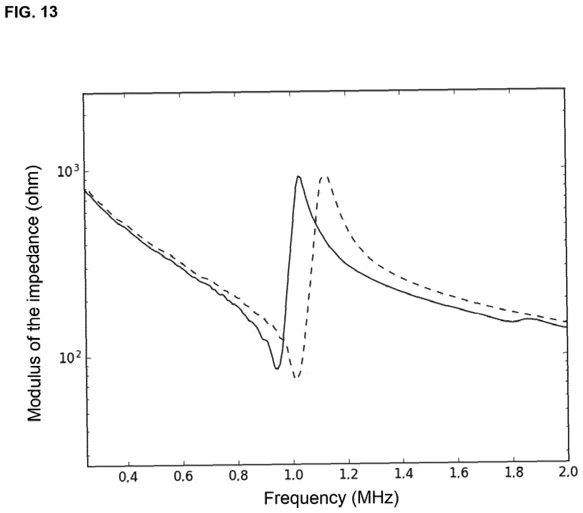

At this point, the electrical impedance measurement of the transducer is repeated to verify the correct deposition of the resin layer, as explained in (1). For this, the free end of the cable and the bushing are connected to the terminals of the impedance analyser. The result is shown in Figure 13.

A 1 mm thick layer, with a side > 25 mm, is cut from a block of syntactic foam.

The thickness of the previous layer is lowered, either by means of a numerical control lathe or by using a polisher, to a thickness of 330 $\mu$m, guaranteeing the flat parallelism of both faces of the layer. A disc is cut from this layer with the same diameter as the external diameter of the housing or case of the transducer (13.3 mm in this case). Said operation can be performed using a punch.

The syntactic foam layer is affixed to the surface of the transducer using the same epoxy resin that was deposited on the surface of the piezoelectric element. The added thickness of epoxy resin to achieve this bond must be 100 $\mu$m.

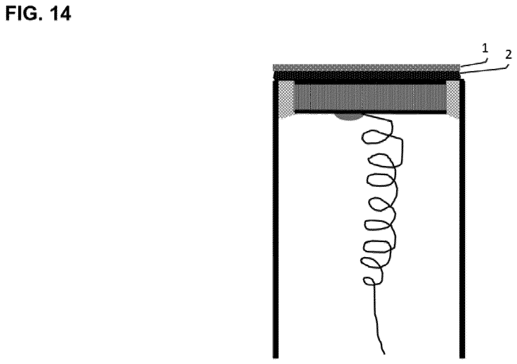

The amount of resin added is controlled by weighing on a precision scale. See Figure 14. Side view of the transducer with the deposited layers of epoxy resin and syntactic foam.

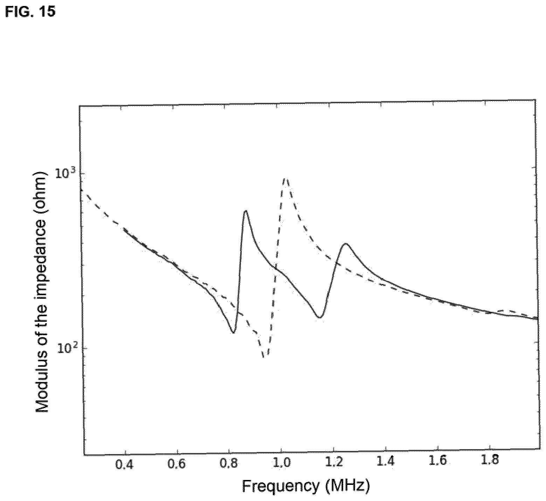

Once the previous layer has cured and therefore the syntactic foam layer has been affixed, the electrical impedance measurement is repeated by connecting the free end of the cable and the housing or case to the terminals of the impedance analyser to verify the correct placement of this layer as explained in (1). The result is shown in Figure 15. Electrical impedance of the transducer before (dashed line) and after (solid line) depositing the syntactic foam layer.

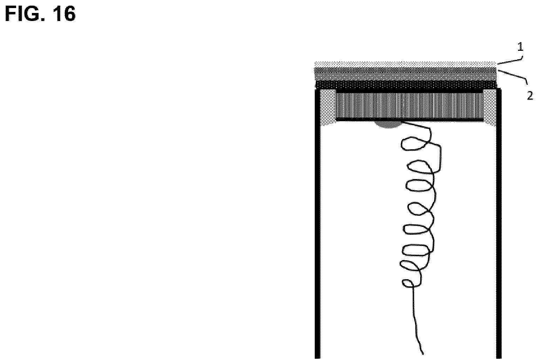

Once verified, a layer of pressure-sensitive double-sided adhesive tape (thickness 60 $\mu$m) is placed on the external surface of the syntactic foam layer. The adaptive and resonant polymer membrane is placed on this layer of adhesive tape. See Figure 16. Side view of the transducer with the layers of adhesive tape and membrane. To ensure the layer of double-sided adhesive tape is correctly affixed to both the syntactic foam and the membrane, it is subjected to a pressure in the normal direction of the bonding plane of about 150 kN/m$^2$. And at a temperature of 50 °C for 30 minutes.

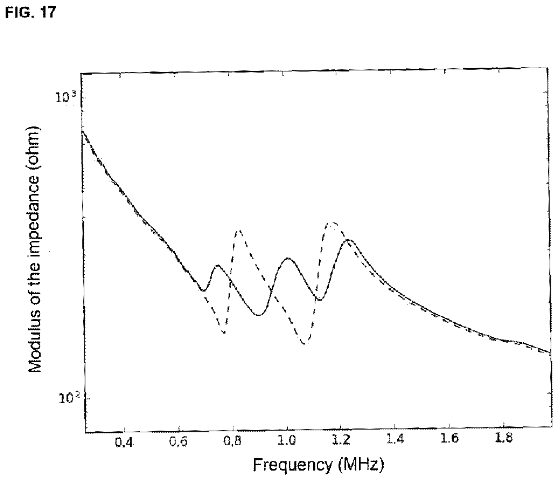

Once this cycle is finished and the transducer has cooled down, the electrical impedance measurement is repeated by connecting the free end of the cable and the bushing to the terminals of the impedance analyser to verify the correct placement of this layer as explained in (1). The result is shown in Figure 17.

*(4) Front crown or rim.*

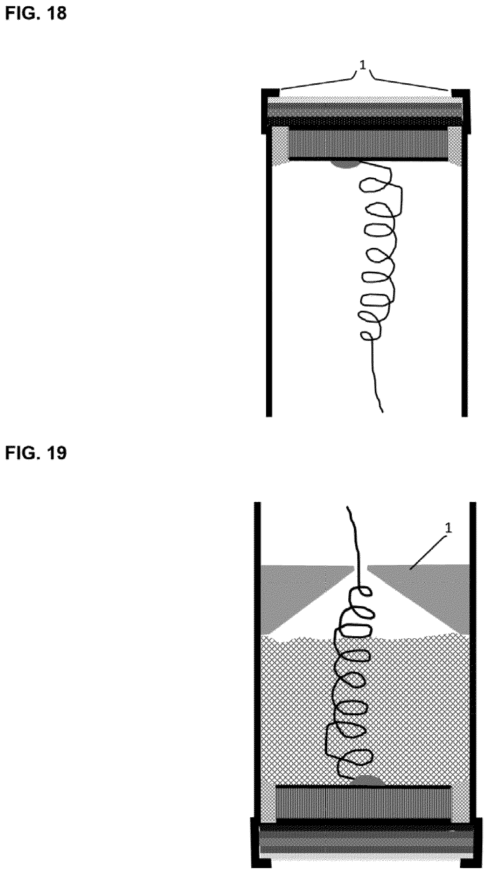

Once the last layer of the stack of layers has been deposited, both the front face and the side face are protected by placing the front protection ring, which can be simply fitted or fitted and affixed onto the housing or case. See Figure 18. Side view of the transducer with a front crown or rim.

*(5) Placement of the backing.*

Once the front protection crown or rim is placed, the transducer is placed in a vertical position, resting on the front crown. The cavity formed by the housing or case and the surface of the piezoelectric disc is filled with the mixture of epoxy resin, tungsten and rubber powder before the mixture begins to cure, up to a height of 2/3 of the total height of the bushing, ensuring that the free end of the cable soldered to the piezoelectric disc is free. The mixture is left to cure. See Figure 19. Side view of the transducer with the backing deposited.

Manufacture of the mould for the conical finish of the backing. A disc is cut from the low-density polyurethane foam (100-300 kg/m$^3$), with a diameter equal to the internal diameter of the metal bushing and a thickness equal to the radius. A conical surface with a generatrix at 45 degrees from the axis is carved on one of the faces of this disc. A small hole (< 1 mm diameter) is made at the vertex.

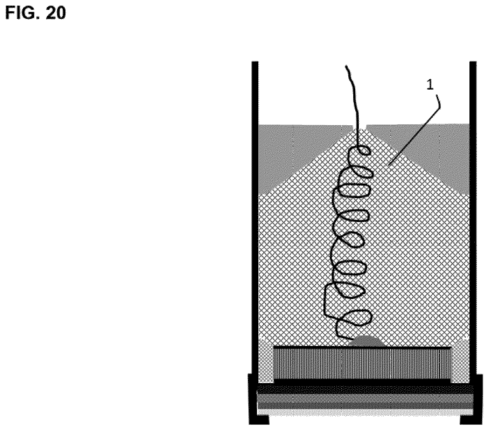

The mould thus manufactured is placed on the backing deposited in the housing or case by passing the free end of the cable soldered to the piezoelectric disc through the hole made at the vertex of the conical surface. See Figure 20. Side view of the transducer with the mould for the completion of the backing.

The conical space between the mould and the backing is filled with the same mixture of resin, tungsten and rubber powder with which the backing was manufactured. It is left to cure. See Figure 20. Side view of the transducer with the backing completed.

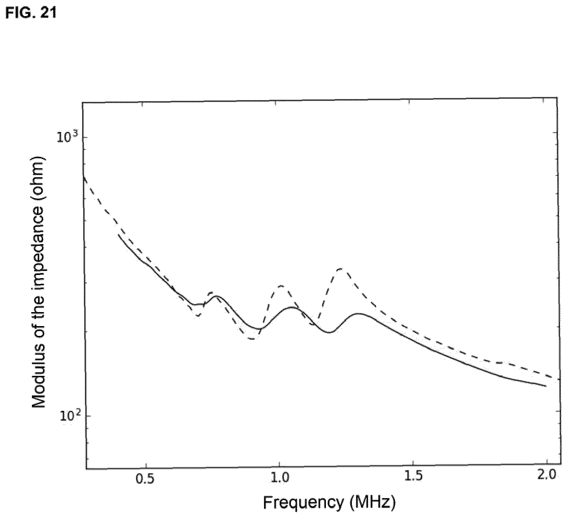

Once the backing is placed, the correct operation is verified again by measuring the electrical impedance of the transducer. The result is shown in Figure 21.

*(6) Placement of the connector and rear cover.*

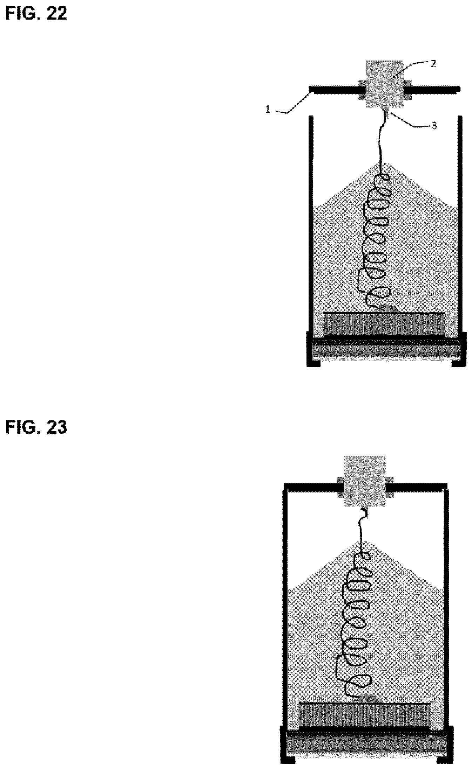

The panel SMB coaxial connector is fastened to the rear cover. The grounded connector is connected to the rear cover. The free end of the cable is soldered to the internal pin of the coaxial connector (SMB). See Figure 22. Side view of the transducer with the free end of the cable soldered to the internal pin of the coaxial connector housed in the rear cover.

The rear cover is fastened to the housing or case ensuring the electrical connectivity between the rear cover and the body of the housing or case and between the internal pin of the connector and the cable of the transducer. See Fig. 23. Side view of the transducer closed at the rear.

*(7) Manufacture of the material to make the backing of the transducer and of the material to fasten the piezoelectric disc to the bushing. Both materials are identical.*

The material is made up of epoxy resin, tungsten powder (12 microns) and rubber powder (<120 microns). Weight ratio: Resin: 22%, Tungsten powder: 72%, rubber powder: 6 %

The additives (tungsten powder and rubber powder) are added to component A of the resin.

The three components are mixed well.

Resin hardener (part B) is added.

The mixture is placed in a vacuum to remove trapped gas.

The mixture is deposited in its final location. The mixture is again degassed in a vacuum hood.

It is subjected to hydrostatic pressure to remove the smallest bubbles (30 min, 6 bar).

The resin is cured following the manufacturer's instructions.

*(8) Verification of the properties of the membrane: resonance frequency and impedance.*

To verify the correct selection of the membrane, the characterisation technique described in the following references is applied

[1] T. Gomez Alvarez-Arenas, "Air-coupled ultrasonic spectroscopy for the study of membrane filters," J. Memb. Sci., vol. 213, no. 1-2, p. 195-207, Mar. 2003.

[2] T. E. Gomez Alvarez-Arenas, "A non-destructive integrity test for membrane filters based on air-coupled ultrasonic spectroscopy.," IEEE Trans. Ultrason. Ferroelectr. Freq. Control, vol. 50, no. 6, p. 676-85, Jun. 2003.

[3] T. E. Gomez Alvarez-Arenas. Device for the characterisation of ultrasonic materials with gas coupling (air) and the application thereof to carry out a non-destructive test to verify the integrity of porous membranes. Patent ES 2239500B1, 2003 which consists of the measurement of the transmission coefficient of the membrane to the ultrasounds using normal incidence and air as a coupling medium in a frequency range where the membrane thickness resonance appears. Under these conditions, said resonance appears at the frequency wherein the wavelength is equal to twice the thickness (that is, resonance $\lambda/2$). This frequency has to be twice the centre frequency of the transducer, since when the membrane is deposited on the transducer its resonance will be $\lambda/4$. That is, a membrane is needed the resonance frequency of which is 2.0 MHz, the tolerance for this criterion is 5%.

In addition, based on the theoretical analysis of the magnitude and phase of the transmission coefficient, it is also possible to determine the impedance of the material [4].

[4] T. E. Gomez Alvarez-Arenas, "Simultaneous determination of the ultrasound velocity and the thickness of solid plates from the analysis of thickness resonances using air-coupled ultrasound.," Ultrasonics, vol. 50, no. 2, p. 104-9, Feb. 2010.

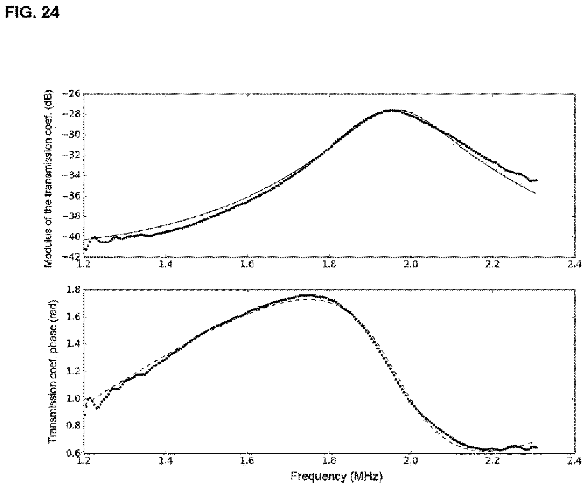

The spectrum of the transmission coefficient of the selected membrane (magnitude and phase) and the theoretical adjustment that enables the determination of the impedance are shown in Figure 24. Resonance frequency $\lambda/2$ is at 1.95 MHz, so the resonance $\lambda/4$ will be 0.98 MHz, and the impedance value is 0.088 MRayl.

Figure 24 shows the Spectrum of the transmission coefficient (magnitude and phase) of the membrane used for the external layer of the transducer. Blue line: theoretical calculation, green points: measurement.

To measure the impulse response and the sensitivity band at ambient pressure and with an air overpressure of 5 bar, of the manufactured transducer, an Olympus transmitter-receiver (5072) is used, a 90 V amplitude excitation pulse, and the received signal is taken directly to the oscilloscope, without any extra amplification. A 22 uH inductance is placed in parallel with the terminals of the transducer. The reflector was a steel block located at 7 mm.

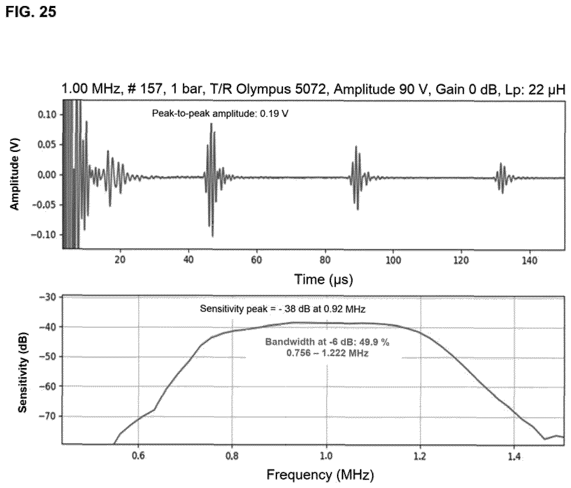

Figure 25 shows the impulse response and the sensitivity band of the transducer in pulse-echo mode obtained at ambient pressure.

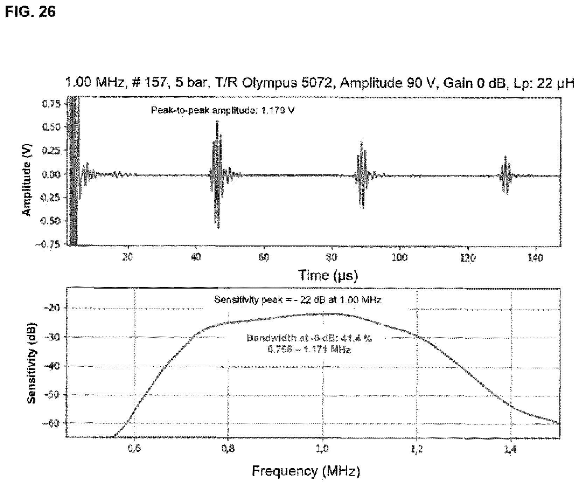

Figure 26 shows the impulse response and the sensitivity band of the transducer in pulse-echo mode obtained with an overpressure of 5 bar (73 psi) of air.

**Claims**

1. A layer structure **characterised in that** it comprises

   • a resonant adaptive polymer membrane (7) with a thickness between 50 $\mu$m and 150 $\mu$m presenting

     ◦ quarter-wave resonance conditions at a centre frequency greater than or equal to 1 MHz, between 1 MHz and 4 MHz,
     ◦ an acoustic impedance between 0.1 MRayl and 0.5 MRayl,
     ◦ a porosity greater than 70% and
     ◦ interconnected pores;

   • a pressure-sensitive adhesive layer (6), less than 60 $\mu$m thick,

     ◦ located on the resonant layer (7) and covering said layer (7) completely;

◦ which has an acoustic impedance between 0.5 MRayl and 1.5 MRayl;

• a syntactic foam layer (5), with a thickness between 100 $\mu$m and 500 $\mu$m

◦ located on the layer (6) and covering said layer (6) completely,
◦ which has an acoustic impedance between 0.5 MRayl and 2 MRayl;

• a polymer layer (4) with a thickness between 100 $\mu$m and 500 $\mu$m

◦ located on the layer (5) and covering said layer (5) completely,
◦ which has an acoustic impedance between 1.5 MRayl and 3.5 MRayl;

• a first conductive layer (2e), with a thickness of between 20 nm and 100 nm, located on the layer (4) and covering said layer (4) completely;
• a piezoelectric layer (1) comprising an internal face (i) and an external face (e)

◦ with a thickness of between 0.5 and 2 mm,
◦ which is located on the conductive layer (2e), wherein the external face (e) is in direct contact with the conductive layer (2e), and
◦ which is partially covering said conductive layer (2e);

• a second conductive layer (2i), with a thickness of between 20 nm and 100 nm, located on the internal face (i) of the piezoelectric layer (1) and covering said layer (1) completely;
• a block (3), with anechoic conical finish,

◦ with a thickness between 15 mm and 30 mm,
◦ located on the conductive layer (2i) and extending around the layers (2i) and (1) until contacting the conductive layer (2e),
◦ which has an acoustic impedance between 5 MRayl and 10 MRayl,
◦ and which is composed of an epoxy resin comprising particles with a diameter between 1 $\mu$m and 50 $\mu$m selected from among tungsten, zirconia, alumina and any of the combinations thereof;

wherein (1), (2i), (2e), (3), (4), (5), (6) and (7) withstand hydrostatic pressures up to 262 bar,
wherein the piezoelectric layer is polarised along the thickness thereof, and
wherein the layers (4), (5) and (6) form an assembly having quarter-wave resonance conditions at a centre frequency greater than or equal to 1 MHz, between 1 MHz and 4 MHz.

**2.** The structure according to claim 1, wherein the resonant adaptive polymer membrane (7) is selected from polypropylene, cellulose nitrate, cellulose ester, polyethersulfone and nylon.

**3.** The structure according to any of claims 1 or 2, wherein the pressure-sensitive adhesive layer (6) is selected from an acrylic layer or a polyurethane layer.

**4.** The structure according to any of claims 1 to 3, wherein the syntactic foam layer (5) is composed of an epoxy resin with hollow spheres with a diameter between 1 $\mu$m and 20 $\mu$m.

**5.** The structure according to any of claims 1 to 4, wherein the polymer layer (4) is an epoxy resin.

**6.** The structure according to any of claims 1 to 5, wherein the conductive layers (2e) and (2i) are independently composed of a conductive material selected from Au, Ag, Cu, Sn and any of the combinations thereof.

**7.** The structure according to any of claims 1 to 6, wherein the composition of the piezoelectric layer (1) is selected from a PZT-type ceramic of lead zirconate titanate $PbZrO_3$-$PbTiO_3$, a composite material of piezoelectric ceramic and resin with 1-3 type connectivity and with a volumetric concentration of ceramic between 25% and 80%, and a $Pb(Mg_{1/3}Nb_{2/3})OR_3$-$PbTiO_3$-type piezoelectric single crystal.

**8.** A method for obtaining the structure according to any of claims 1 to 7, **characterised in that** it comprises the following steps:

(a) joining the piezoelectric layer (1) covered by the conductive layers (2i) and (2e) to a sacrificial layer by means of adhesive tape (6) on a first face,

(b) joining a metal housing or case (8) to the sacrificial layer with the help of adhesive tape (6),

(c) filling the space formed between the piezoelectric layer (1) and the metal housing or case with resin (3) and curing said resin (3),

(d) removing sacrificial layer,

(e) metallising the first face of the piezoelectric layer (1) so that the conductive layer (2e) completely covers the piezoelectric element and the edge of the bushing,

(f) depositing the polymer layer (4) on the conductive layer (2e), curing and polishing,

(g) affixing the syntactic foam layer (5) to the polymer layer (4),

(h) adhering the pressure-sensitive adhesive layer (6) on the syntactic foam layer (5),

(i) affixing the resonant adaptive polymer membrane (7) to the pressure-sensitive adhesive layer (6),

(j) fastening the assembly of layers (1), (2e), (2i), (3), (4), (5), (6) and (7) and turning it over, and

(k) filling the inner space of the metal housing or case with the help of a conical mould to form a conical-shaped block (3).

9.   The method according to claim 8, wherein step (e) is carried out by means of techniques selected from sputtering, vacuum metallisation, evaporation metallisation, screen-printed metallisation, dip coating and spin coating.

10.  The method according to any of claims 8 or 9, wherein the deposition of step (f) is carried out by means of deposition techniques selected from dip coating, spin coating, and screen printing.

11.  The method according to any of claims 8 to 10, wherein step (g) is carried out using an adhesive that has the same composition as the polymer layer (4).

12.  Use of the structure according to any of claims 1 to 7, as part of a piezoelectric ultrasonic transducer to detect echoes generated by a solid body in the presence of a pressurised gas at a pressure between 14 bar and 103 bar.

13.  A piezoelectric ultrasonic transducer to detect echoes generated by a solid body in the presence of a pressurised gas at a pressure between 14 bar and 103 bar, **characterised in that** it comprises

   • the structure according to any of claims 1 to 7,

      ◦ wherein the resonant adaptive polymer membrane (7) is configured to act as a quarter-wave resonant layer at the centre frequency of the transducer,
      ◦ wherein the assembly formed by (4), (5) and (6) is configured to act together as a single resonant layer of the centre frequency of the transducer and gradually reduce the acoustic impedance of the structure,
      ◦ wherein the first conductive layer (2e) and the second conductive layer (2i) are configured to act as an electrode and enable the application/measurement of electric field in the piezoelectric layer (1),
      ◦ wherein the block (3) is configured to damp the vibration of the piezoelectric layer (1),

   • a metal housing or case (8) comprising a coaxial connector (9) with a ground connection and an internal connector (10) of the rear cover (12) of the metal housing or case (8) and which is configured to house the structure and provide electromagnetic shielding,
      ◦ wherein (2e), (3), (4), (5), (6) and (7) are in contact with the walls of the receptacle (8);
   • a coaxial connector (9) that joins the internal connector (10) of the rear cover (12) of the metal housing or case (8) to the second conductive layer (2i) that is configured to apply a voltage to the piezoelectric element through the connector or to measure the voltage generated in the piezoelectric element; and
   • a protective crown or rim (12) configured to protect the resonant adaptive polymer membrane (7) and the lateral edge of the resonant adaptive polymer membrane (7), the assembly formed by (4), (5) and (6), the block (3), the first conductive layer (2e) and the second conductive layer (2i).

**FIG. 1.**

FIG. 2.

Front crown

Central body

Rear cover

FIG. 3

**FIG. 4**

**FIG. 5**

**FIG. 6**

**FIG. 7**

**FIG. 8**

**FIG. 9**

FIG. 10

**FIG. 11**

**FIG. 12**

FIG. 13

FIG. 14

FIG. 15

FIG. 16

FIG. 17

**FIG. 18**

**FIG. 19**

FIG. 20

FIG. 21

**FIG. 22**

**FIG. 23**

FIG. 24

FIG. 25

1.00 MHz, # 157, 1 bar, T/R Olympus 5072, Amplitude 90 V, Gain 0 dB, Lp: 22 µH

**FIG. 26**

1.00 MHz, # 157, 5 bar, T/R Olympus 5072, Amplitude 90 V, Gain 0 dB, Lp: 22 µH

# EP 3 929 578 A1

## INTERNATIONAL SEARCH REPORT

| International application No. |
|---|
| PCT/ES2020/070122 |

### A. CLASSIFICATION OF SUBJECT MATTER

**See extra sheet**

According to International Patent Classification (IPC) or to both national classification and IPC

### B. FIELDS SEARCHED

Minimum documentation searched (classification system followed by classification symbols)

G01N, G10K

Documentation searched other than minimum documentation to the extent that such documents are included in the fields searched

Electronic data base consulted during the international search (name of data base and, where practicable, search terms used)

EPODOC, INVENES, internet

### C. DOCUMENTS CONSIDERED TO BE RELEVANT

| Category* | Citation of document, with indication, where appropriate, of the relevant passages | Relevant to claim No. |
|---|---|---|
| Y | T.E. GÓMEZ ALVAREZ-ARENAS, et al. Novel impedance matching materials and strategies for air-coupled piezoelectric transducers. Sensors, 2013 IEEE, 11/2013, pages 1-4 [on line] [retrieved from the internet 02/06/2020]. Section II-section VI | 1-7, 12, 13 |
| Y | US 2005075571 A1 (BARNES STEPHEN R) 07/04/2005, paragraphs 32, 33; figure 1 | 1-7,12,13 |
| A | T.E. GÓMEZ ALVAREZ-ARENAS.. Air-Coupled Piezoelectric Transducers with Active Polypropylene Foam Matching Layers. Sensors, 10/05/2013, Vol. 13, N° 5, pages 5996-6013 [on line] [retrieved from the internet 02/06/2020]. figure 3 | 13 |
| A | STEPHEN P. KELLY, et al. Characterization and Assessment of an Integrated Matching Layer for Air-Coupled Ultrasonic Applications. IEEE Transactions On Ultrasonics, Ferroelectrics, And Frequency Control, 01/11/2004, Vol. 51, N° 10, pages 1314-1323 [on line] [retrieved from the internet 02/06/2020]. | 13 |
| A | T. E. GÓMEZ ÁLVAREZ-ARENAS. Pressure sensitivity response of polymeric ferroelectret foam films. Joint IEEE International Symposium On The Applications Of Ferroelectric, International Workshop On Acoustic Transduction Materials And Devices & Workshop On Piezoresponse Force Microscopy, 12/05/2014, pages 1-4 [on line][retrieved from the internet 02/06/2020]. | 13 |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 03/06/2020 | **(03/06/2020)** |

| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>F. Bejarano Durán<br><br><br>Telephone No. 91 3495441 |

Form PCT/ISA/210 (second sheet) (January 2015)

## INTERNATIONAL SEARCH REPORT

Information on patent family members

International application No.

PCT/ES2020/070122

| Patent document cited in the search report | Publication date | Patent family member(s) | Publication date |
|---|---|---|---|
| US2005075571 A1 | 07.04.2005 | NONE | |

Form PCT/ISA/210 (patent family annex) (January 2015)

## INTERNATIONAL SEARCH REPORT

International application No.

PCT/ES2020/070122

### CLASSIFICATION OF SUBJECT MATTER

*G01N29/24* (2006.01)
*G01N29/28* (2006.01)
*G10K11/02* (2006.01)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 005587534 A

- ES 2239500 B1

**Non-patent literature cited in the description**

- **T. GOMEZ ALVAREZ-ARENAS.** Air-coupled ultrasonic spectroscopy for the study of membrane filters. *J. Memb. Sci.,* March 2003, vol. 213, 195-207
- **T. E. GOMEZ ALVAREZ-ARENAS.** A non-destructive integrity test for membrane filters based on air-coupled ultrasonic spectroscopy. *IEEE Trans. Ultrason. Ferroelectr. Freq. Control,* June 2003, vol. 50 (6), 676-85

- **T. E. GOMEZ ALVAREZ-ARENAS.** Simultaneous determination of the ultrasound velocity and the thickness of solid plates from the analysis of thickness resonances using air-coupled ultrasound. *Ultrasonics,* February 2010, vol. 50 (2), 104-9